**Europäisches Patentamt**

**European Patent Office**

**Office européen des brevets**

(19)

(11) Veröffentlichungsnummer: **0 195 788**
**B1**

(12)                    **EUROPÄISCHE PATENTSCHRIFT**

(45) Veröffentlichungstag der Patentschrift:
**28.12.88**

(51) Int. Cl.⁴: **A 01 D 45/16**

(21) Anmeldenummer: **85904578.3**

(22) Anmeldetag: **24.09.85**

(86) Internationale Anmeldenummer:
**PCT/AT 85/00032**

(87) Internationale Veröffentlichungsnummer:
**WO 86/01973 (10.04.86 Gazette 86/8)**

(54) **VERFAHREN UND VORRICHTUNG ZUM ERNTEN DER BLÄTTER VON NUTZPFLANZEN, INSBESONDERE VON TABAKBLÄTTERN.**

(30) Priorität: **25.09.84 AT 3031/84**

(43) Veröffentlichungstag der Anmeldung:
**01.10.86 Patentblatt 86/40**

(45) Bekanntmachung des Hinweises auf die Patenterteilung:
**28.12.88 Patentblatt 88/52**

(84) Benannte Vertragsstaaten:
**BE CH DE FR IT LI NL**

(56) Entgegenhaltungen:
**DE-A- 2 457 012**
**FR-A- 2 171 529**
**FR-A- 2 358 817**
**US-A- 3 606 723**

(73) Patentinhaber: **PAAR, Friedrich, A-8283 Kleinsteinbach Nr. 27 (AT)**

(72) Erfinder: **PAAR, Friedrich, A-8283 Kleinsteinbach Nr. 27 (AT)**

(74) Vertreter: **Boeckmann, Peter, Dipl.-Ing. et al, Patentanwälte Dipl.-Ing. Peter Boeckmann, Dipl.-Ing. Leo Brauneiss Strohgasse 10, A-1030 Wien (AT)**

## Beschreibung

Die Erfindung bezieht sich auf ein Verfahren zum Ernten von Tabakblättern, bei welchem ein Band in Längsrichtung einer Pflanzenreihe neben dieser auf den Boden aufgelegt wird, auf welches Band die entlang dieses Bandes geernteten Blätter gelegt werden, worauf schliesslich das Band mit den draufliegenden Blättern in Längsrichtung der Pflanzenreihe aus dem Tabakfeld gezogen wird, wobei das Band nach Abnahme der Blätter auf eine auf einem stehenden Traggestell einer Einzugsvorrichtung montierte, zur Drehbewegung angetriebene Wickelwalze aufgewickelt wird, die in einer Horizontalebene schwenkbar ist. Ferner bezieht sich die Erfindung auf eine Vorrichtung zur Durchführung des Verfahrens.

Beim Ernten von Tabakblättern werden bisher zumeist die Blätter von etwa 6 bis 8 Pflanzen vom Pflücker gesammelt und zwischen den Tabakpflanzenreihen stapelweise abgelegt. Diese Blätter werden dann aus dem Feld getragen und auf ein Erntefahrzeug geladen. Die verladene Ernte wird in die Trockenscheune gefahren, dort wieder abgeladen und auf ein Förderband aufgelegt, welches die Tabakblätter zu einer Nähmaschine führt, mit welcher die Tabakblätter paketweise vernäht werden. Diese Arbeiten, insbesondere das Tragen der Tabakblätter aus dem Feld, sind mühsam und zeitraubend, und es werden die Tabakblätter nicht genügend geschont.

Es ist auch bereits bekannt, zur Ernte von Tabakblättern Maschinen einzusetzen, z. B. einen längs der Tabakpflanzenreihen verfahrbaren Erntewagen, wobei die auf diesem Wagen sitzenden Pflücker die Tabakblätter auf ein Förderband legen, das diese Blätter in einen vom Wagen mitgeführten Behälter wirft. Andere bekannte Vorrichtungen sehen ein quer zu den Tabakpflanzenreihen verlaufendes, von einem Traktor mitgeführtes Förderband vor, auf welches mehrere Pflücker die Tabakblätter auflegen und welches diese Tabakblätter ebenfalls zu einem vom Traktor mitgeführten Behälter führt. Nachteilig hieran ist, dass das Einwerfen der Tabakblätter in den Behälter die Tabakblätter nicht genügend schont und dass die Tabakblätter im Behälter vollkommen ungeordnet liegen, so das sie nachher für den Vernähvorgang erst wieder geordnet werden müssen.

Es ist auch aus der FR-A 2 358 817 bekannt, eine Nähvorrichtung auf einem Erntewagen anzuordnen, welcher zwischen zwei Tabakpflanzenreihen in Längsrichtung derselben fährt und auf welchem ein Pflücker sitzt, der die gepflückten Tabakblätter einheitlich orientiert auf ein Förderband legt, auf welchem die Tabakblätter zu einer endlosen Kette vernäht werden. Diese Kette wird vom Förderband auf ein weiteres Band abgelegt, das beim Verfahren des Erntewagens von einer von diesem Wagen getragenen Wickelwalze abgezogen wird. Nach Beendigung der Arbeit in einer Pflanzenreihe wird dieses Band samt den auf ihm ruhenden, vernähten Tabakblättern wieder eingezogen. Nachteilig hieran ist, dass nur ein einziger Pflücker auf das Band arbeiten kann und dass der maschinelle Aufwand relativ hoch ist.

Aus der FR-A 2 171 529 ist es auch bekannt, zwischen zwei einander benachbarten Pflanzenreihen ein Band auszulegen, auf dieses Band die gepflückten Tabakblätter abzulegen und dieses Band dann zusammen mit den auf ihm aufruhenden Tabakblättern einzuziehen. Diese Vorgangsweise erlaubt es, mehrere Pflücker auf ein einziges Band arbeiten zu lassen. Nachteilig ist jedoch an der bekannten Vorgangsweise die Einholung des Bandes, welches auf eine ortsfest gelagerte Wikkelwalze aufgewickelt wird, der eine weitere, an ihrem Umfang geriffelt ausgebildete Walze vorgeschaltet ist. Diese geriffelte Walze ist zusammen mit der Aufwickelwalze in einem Rahmen gehaltert, wobei die Achsen der beiden Walzen zueinander parallel liegen und die Richtung der beiden Achsen durch eine Spindel verstellbar ist, so dass die Walzenachsen in eine zur Längsrichtung des aufzuwickelnden Bandes normale Lage gebracht werden können. Es hat sich jedoch gezeigt, dass dies nur mangelhaft möglich ist und dass schon geringe Abweichungen von der Soll-Lage genügen, um das Band mit Falten aufzuwickeln, so dass es beim Auslegen wieder auseinandergezogen werden muss. Eine Faltenbildung beim Aufwickeln bedingt auch ungleichmässige Zugkräfte, gemessen über den Querschnitt des Bandes, so dass es zu Schrägstellungen desselben und damit zum Abgleiten der abgelegten Tabakblätter vom Band kommen kann.

Die Erfindung setzt sich zur Aufgabe, ein Verfahren der eingangs geschilderten Art so zu verbessern, dass die schwere körperliche Arbeit des Austragens der Blätter aus dem Acker vermieden wird und eine grösstmögliche Schonung des Erntegutes sowie eine Verringerung des Arbeitsaufwandes dadurch erreicht wird, dass die Vorgänge des Aufwickelns des Bandes und des Vernähens der Tabakblätter verlässlicher und rascher durchgeführt werden können. Die Erfindung löst diese Aufgabe dadurch, dass das Band über eine bombierte, ebenfalls in einer Horizontalebene schwenkbare Welle zur Wickelwalze gezogen wird und dass die Tabakblätter von diesem Band einer vom Traggestell getragenen Nähvorrichtung zugeführt werden, mit der die Tabakblätter partienweise verbunden werden. Im Sinne des erfindungsgemässen Verfahrens wird also das Band in Längsrichtung der Pflanzen auf den Boden aufgelegt und in derselben Richtung nach Durchführung des Pflückvorganges eingezogen, der von mehreren Personen auf dasselbe Band zugeführt werden kann. Die Einziehung des Bandes erfolgt über die sich selbst verschwenkende Welle, die damit automatisch für eine faltenfreie Aufwicklung des Bandes auf die Wickelwalze sorgt. Die Tabakblätter gelangen daher verlässlich zur Nähvorrichtung und können auf dieser rasch partienweise verbunden werden, da beim erfindungsgemässen Verfahren der Nähvorgang in seiner Geschwindigkeit lediglich begrenzt ist durch die Leistung der Nähvorrichtung bzw. der sie bedienenden Person, nicht aber von der Pflückerleistung, wie dies beim eingangs beschriebenen bekannten Verfahren der Fall ist. Ausserdem erfolgt die Verbindung der Tabakblätter partienweise, wie dies für eine rationelle Trocknung wünschenswert ist.

Gemäss einer bevorzugten Ausführungsform des erfindungsgemässen Verfahrens wird das Band von einem mittels eines Erntewagens transportierten Bandwickel bei der Auslegung abgezogen und das Band in der Fahrtrichtung dieses Erntewagens eingezogen. Dies ermöglicht es, den Bandwickel mit dem eventuellen Rest des Bandes direkt vom Erntewagen in die Einzugsvorrichtung umzuhängen.

Gemäss einer Weiterbildung des erfindungsgemässen Verfahrens werden die Tabakblätter vom Band an zumindest ein Förderband übergeben, welches die Tabakblätter am Traggestell der Nähvorrichtung zuführt. Dadurch werden die Tabakblätter geschont und zugleich eine händische Abnahme vom Band eingespart.

Die erfindungsgemässe Vorrichtung zur Durchführung des erfindungsgemässen Verfahrens ist gekennzeichnet durch eine Einzugsvorrichtung, die eine um eine horizontale Achse drehbare, angetriebene Wickelwalze und eine bombierte, um einen vertikalen Bolzen des Traggestelles in einer Horizontalebene von selbst schwenkbare Welle hat, über die das einzuziehende Band zur Wickelwalze läuft, wobei die Einzugsvorrichtung und eine Nähvorrichtung auf einem gemeinsamen Traggestell angeordnet sind. Dies ergibt bei geringem Aufwand eine verlässlich arbeitende Konstruktion. Besonders günstig ist es hierbei, wenn erfindungsgemäss an den Rändern der Welle Laschen, z. B. aus Gummi, angeordnet sind, welche gleichfalls eine Führung des Bandes auf der bombierten, sich selbst schwenkenden Welle bewirken und dadurch die Welle laufend in die richtige Lage bringen.

Um das ausgelegte Band einwandfrei einholen zu können, muss die Achse der Wickelwalze der Einzugsvorrichtung möglichst genau normal zur Längsrichtung des ausgelegten Bandes stehen. Da dies auf dem Feld mit einem Traktor mitunter schwer zu realisieren ist, ist es im Rahmen der Erfindung zweckmässig, wenn eine die Einzugsvorrichtung tragende Halterung schwenkbar in bezug auf das an einen Traktor anschliessbare Traggestell montiert ist. Dies erlaubt eine grobe Einrichtung der Einzugsvorrichtung auf die Richtung des einzuholenden Bandes von Hand aus. Die Feineinstellung erfolgt dann über die bombierte Welle, über welche das einzuziehende Band läuft und die ebenfalls in einer Horizontalebene schwenkbar ist. Diese zusätzliche Schwenkbarkeit begünstigt die einwandfreie Bandaufwicklung.

Es ist anzustreben, das mit den geernteten Blättern belegte Band mit konstanter Einzugsgeschwindigkeit einzuholen, um den die Nähvorrichtung betätigenden Näher nicht zu überfordern. Hierzu hat gemäss einer Weiterbildung der Erfindung die Einzugsvorrichtung ausser der bombierten Welle noch zwei Wellen, zwischen denen das einzuholende Band hindurchgeführt ist, wobei eine dieser Wellen in horizontaler Richtung durch den Einzugswiderstand des Bandes verschiebbar gelagert und gegen die andere Welle drückbar ist. Dadurch wird ein Durchrutschen des Bandes verhindert. Um den bei fortschreitender Bandaufwicklung grösser werdenden Durchmesser der Wickelwalze auszugleichen, kann erfindungsgemäss die Wickelwalze durch einen rutschenden Keilriemen angetrieben sein.

Wie bereits erwähnt, ist es zweckmässig, die Wickelwalze auch zur Auslegung des Bandes entlang der Pflanzenreihen zu verwenden. Hierfür ist im Rahmen der Erfindung die Wickelwalze zwischen einem Erntewagen und der Einzugsvorrichtung umhängbar ausgebildet, um je nach Wahl den Erntewagen bzw. die Einzugsvorrichtung mit der Wickelwalze auszurüsten. Vorzugsweise ist der Erntewagen durch eine Tastvorrichtung selbsttätig lenkbar, so dass die am Erntewagen sitzende Person sich nur mit der Ernte der Blätter zu befassen braucht.

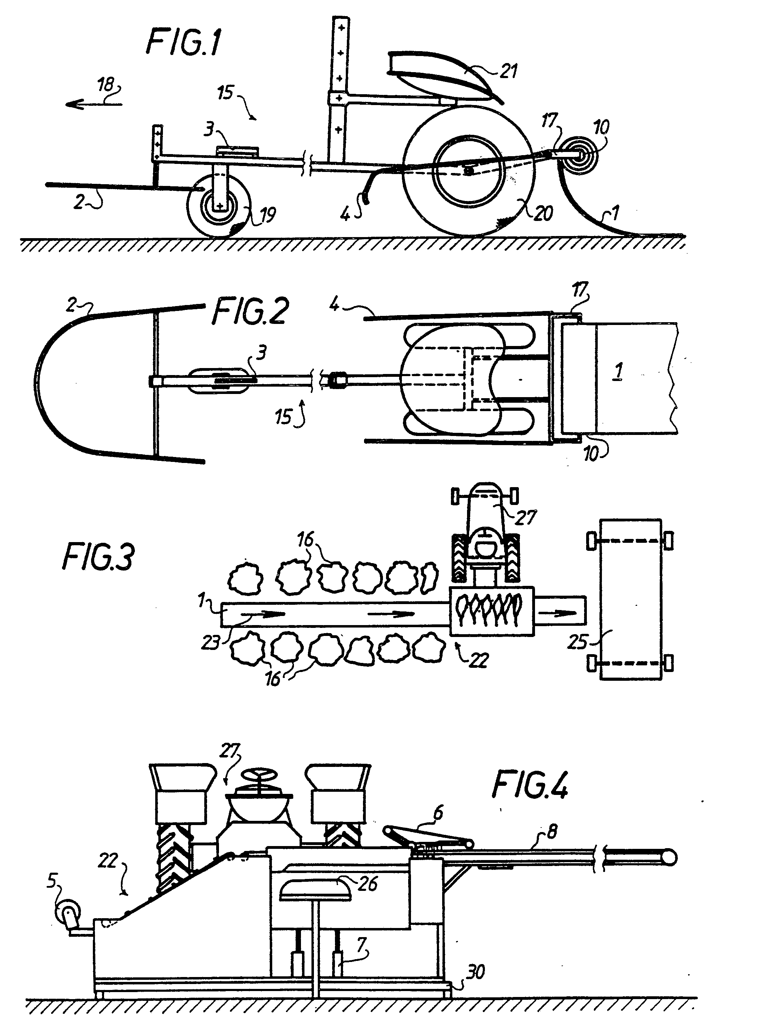

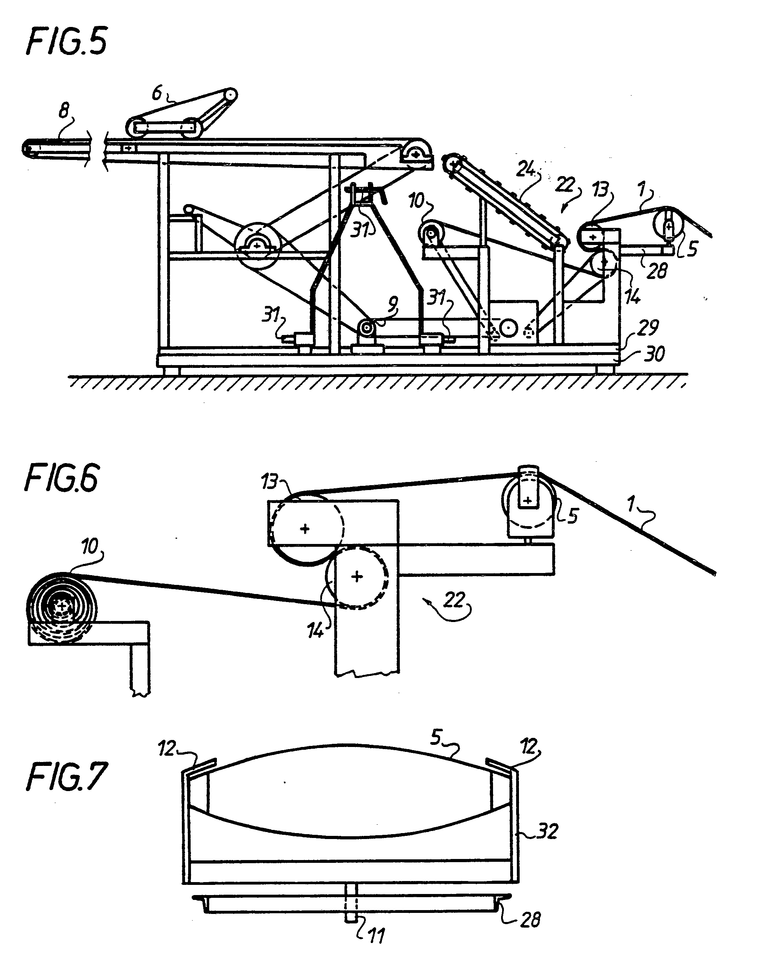

In der Zeichnung sind die Durchführung des erfindungsgemässen Verfahrens sowie hierzu geeignete Vorrichtungen an Hand von Ausführungsbeispielen schematisch veranschaulicht. Fig. 1 zeigt die Auslegung des Bandes mittels eines Erntewagens in Seitenansicht. Fig. 2 ist eine Draufsicht zu Fig. 1. Fig. 3 zeigt in Draufsicht das Schema der Einholung des Bandes. Fig. 4 zeigt die an einem Traktor montierte Einzugsvorrichtung. Fig. 5 zeigt die Einzugsvorrichtung von der Traktorseite her gesehen. Die Fig. 6 und 7 zeigen Details in grösserem Massstab.

Beim Ernten von Tabakblättern wird mit einem Erntewagen 15 (Fig. 1, 2) ein Band 1 in Längsrichtung der Reihen der Tabakpflanzen 16 (Fig. 3), zweckmässig zwischen zwei solchen Reihen, ausgelegt. Hierzu ist das Band 1 auf einer Wickelwalze 10 (Fig. 1) aufgewickelt, die vom Erntewagen 15 mittels Auslegern 17 getragen wird. Auf diesem Erntewagen 15, der in Richtung des Pfeiles 18 fährt, sitzt rücklings der Pflücker der Tabakblätter, welcher die gepflückten Tabakblätter alle in gleicher Orientierung, d. h. mit ihrer Längsrichtung quer zur Ausrollrichtung des Bandes 1 und alle Stengel auf derselben Seite, auf das Band 1 legt. Der Erntewagen 15 kann selbstfahrend sein, jedoch auch vom Pflücker, der auf einem Sitz 21 sitzt, rücklings durch die Reihen der Tabakpflanzen 16 geschoben werden. Die Lenkung des Erntewagens 15 kann selbsttätig durch eine Tastvorrichtung 2 erfolgen, die aus einem U-förmigen Bügel besteht, der vorne am Erntewagen 15 befestigt ist und bei Berührung einer Tabakpflanze 16 von dieser weggedrückt wird, wodurch das Vorderrad 19 des Erntewagens 15 in die richtige Richtung gelenkt wird. Statt dessen kann die Anordnung, insbesondere bei einer Hanglage des Ackers, auch so getroffen sein, dass das Vorderrad 19 mittels eines Hebels 3 fix schräg eingestellt wird. Im Bereich der Hinterräder 20 des Erntewagens 15 sind Blattabweiser 4 zur Schonung der Blätter der Pflanzen angeordnet.

Das Band 1 ist zweckmässig ein Kunststoffband, kann jedoch bei entsprechender Reissfestigkeit auch aus einem anderen Material bestehen.

Ist nun eine Reihe der Tabakpflanzen 16 abgeerntet, so wird die Wickelwalze 10 in eine Einzugsvorrichtung 22 (Fig. 4, 5) eingehängt. Hierbei ist es vorteilhaft, wenn zuvor in Richtung auf diese Einzugsvorrichtung 22 hin geerntet wurde, d. h. die Fahrtrichtung des Erntewagens 15 in Richtung zu dieser Einzugsvorrichtung 22 hin war, weil dann die Wickelwalze 10, gegebenenfalls mit dem auf ihr befindlichen Rest des Bandes 1, direkt vom Erntewagen 15 in die Einzugsvorrichtung 22 umgehängt werden kann. Mittels der Einzugsvorrichtung 22 wird das mit dem Erntegut beladene Band in Richtung der Pfeile 23 (Fig. 3) aus dem Acker gezogen. Dabei wird das Erntegut auf der Einzugsvorrichtung 22 von einem endlosen Förderband 24 übernommen und das Band 1 auf die Wickelwalze 10 wieder aufgewickelt. Das Förderband 24 transportiert die Tabakblätter zu einem weiteren endlosen Förderband 8, über welchem eine mit der Einzugsvorrichtung 22 gekoppelte Nähmaschine 6 mit Blattandrücker angeordnet ist, mit welcher die Tabakblätter partienweise zu Bandelieren vernäht werden, wie sie zum Trocknen der Tabakblätter benötigt werden. Die vernähten Bandeliere werden anschliessend vom Förderband 8 abgenommen und auf einen Wagen 25 (Fig. 3) zum Abtransport geladen.

Die Steuerung der Bandeinzugsvorrichtung 22 und der Nähmaschine 6 erfolgt über zwei Fusspedale 7 (Fig. 4) durch eine Bedienungsperson, welche auf einem Sitz 26 sitzt. Der Antrieb der Einzugsvorrichtung 22 erfolgt von einem Traktor 27 (Fig. 4) aus über eine Gelenkwelle 9 (Fig. 5), wobei die Wickelwalze 10 über einen Keilriemen angetrieben wird, der keine zu grosse Spannung aufweist, so dass er bei grösser werdendem Wickelwalzendurchmesser die dann erforderliche kleinere Drehzahl durch Rutschen ausgleichen kann. Das einzuziehende Band 1 läuft über eine bombierte Welle 5 (Fig. 4 bis 7) sowie über zwei einander benachbarte Wellen 13, 14, zwischen diesen beiden Wellen hindurch, zur Wickelwalze 10. Die beiden Wellen 13, 14 sorgen für eine konstante Einzugsgeschwindigkeit des Bandes 1, wobei die Welle 13 in Horizontalrichtung verschiebbar in einer Halterung 28 gelagert ist. Durch den Einzugswiderstand des Bandes 1 wird diese Welle 13 gegen die angetriebene Welle 14 gedrückt und dadurch ein Durchrutschen des Bandes 1 verhindert.

Die Einzugsvorrichtung 22 bzw. die sie tragende Halterung 28 ist zusammen mit dem die Nähmaschine 6 tragenden Gestell und den Antrieben hierfür an einem Rahmen 29 befestigt, der von einem Traggestell 30 getragen wird, das mittels Bolzen 31 an die übliche Dreipunkthydraulik des Traktors 27 anschliessbar ist. Hierbei ist der Rahmen 29 um eine vertikale Achse in bezug auf das Traggestell 30 schwenkbar, so dass die Einzugsvorrichtung 22 grob auf die Richtung des einzuholenden Bandes 1 von Hand aus eingerichtet werden kann, auch wenn der Traktor 27 auf dem Feld nicht oder nur schwer in die richtige Richtung gestellt werden kann. Um ein absolut zufriedenstellendes Aufwickeln des aufgelegten Bandes 1 zu begünstigen, ist ferner die das Band 1 führende Welle 5 bzw. die die Wellenachse lagernden Wangen 32 mittels eines vertikalen Bolzens 11 in einer Horizontalebene schwenkbar in bezug auf die Halterung 28 angeordnet. Ferner sind an den beiden Wellenenden Laschen 12 angeordnet, welche mit Gummi überzogen sind oder aus Gummi bestehen. Diese Laschen 12 erfüllen die Funktion einer Führung des Bandes und dienen zum Schwenken der Welle um die Achse des Bolzens 11, wodurch das Band 1 laufend wieder in die richtige Lage gebracht wird. Die Schwenkung der Welle 5 setzt dann ein, wenn der Rand des Bandes 1 in eine der Laschen 12 einläuft.

Varianten der dargestellten und beschriebenen Vorgangs- und Bauweise können beispielsweise darin bestehen, dass das Band 1 mit einer von der Einziehvorrichtung gesonderten Abrollvorrichtung oder auch von Hand ausgerollt wird. Die Blätter können danach mittels einer herkömmlichen Methode geerntet werden. Selbstverständlich ist die dargestellte Einzugsvorrichtung 22, mit welcher die Rückholung des Bandes 1 erfolgt, auch ohne Nähmaschine 6 lediglich zum Herausbringen der Ernte aus dem Feld verwendbar. Der Erntewagen 15 mit dem Band 1 oder das Band 1 allein können auch mittels Motorkraft ausgerollt werden.

**Patentansprüche**

1. Verfahren zum Ernten von Tabakblättern, bei welchem ein Band (1) in Längsrichtung einer Pflanzenreihe (16) neben dieser auf den Boden aufgelegt wird, auf welches Band die entlang dieses Bandes (1) geernteten Blätter gelegt werden, worauf schliesslich das Band (1) mit den daraufliegenden Blättern in Längsrichtung der Pflanzenreihe (16) aus dem Tabakfeld gezogen wird, wobei das Band (1) nach Abnahme der Blätter auf eine auf einem stehenden Traggestell (30) einer Einzugsvorrichtung (22) montierte, zur Drehbewegung angetriebene Wickelwalze (10) aufgewickelt wird, die in einer Horizontalebene schwenkbar ist, dadurch gekennzeichnet, dass das Band (1) über eine bombierte, ebenfalls in einer Horizontalebene schwenkbare Welle (5) zur Wickelwalze (10) gezogen wird und dass die Tabakblätter von diesem Band (1) einer vom Traggestell (30) getragenen Nähvorrichtung (6) zugeführt werden, mit der die Tabakblätter partienweise verbunden werden.

2. Verfahren nach Anspruch 1, dadurch gekennzeichnet, dass das Band (1) von einem mittels eines Erntewagens (15) transportierten Bandwikkel bei der Auslegung abgezogen wird und dass das Band (1) in der Fahrtrichtung dieses Erntewagens (15) eingezogen wird.

3. Verfahren nach Anspruch 1 oder 2, dadurch gekennzeichnet, dass die Tabakblätter vom Band (1) an zumindest ein Förderband (24, 8) übergeben werden, welches die Tabakblätter am Traggestell (30) der Nähvorrichtung (6) zuführt.

4. Vorrichtung zur Durchführung des Verfahrens nach einem der Ansprüche 1 bis 3, dadurch gekennzeichnet, dass die Einzugsvorrichtung (22) eine um eine horizontale Achse drehbare, angetriebene Wickelwalze (10) und eine bombierte, um einen vertikalen Bolzen (11) des Traggestelles (30) in einer Horizontalebene von selbst schwenkbare Welle (5) hat, über die das einzuziehende Band (1) zur Wickelwalze (10) läuft, wobei die Einzugsvorrichtung (22) und eine Nähvorrichtung (6) auf einem gemeinsamen Traggestell (30) angeordnet sind.

5. Vorrichtung nach Anspruch 4, dadurch gekennzeichnet, dass an den Rändern der Welle (5) Laschen (12), z. B. aus Gummi, angeordnet sind.

6. Vorrichtung nach Anspruch 4 oder 5, dadurch gekennzeichnet, dass eine die Einzugsvorrichtung (22) tragende Halterung (28) schwenkbar in bezug auf das an einen Traktor (22) anschliessbare Traggestell (30) montiert ist.

7. Vorrichtung nach einem der Ansprüche 4 bis 6, dadurch gekennzeichnet, dass die Einzugsvorrichtung (22) ausser der bombierten Welle (5) noch zwei Wellen (13, 14) hat, zwischen denen das einzuholende Band (7) hindurchgeführt ist, wobei eine (13) dieser Wellen in horizontaler Richtung durch den Einzugswiderstand des Bandes (1) verschiebbar gelagert und gegen die andere Welle (14) drückbar ist.

8. Vorrichtung nach einem der Ansprüche 4 bis 8, dadurch gekennzeichnet, dass die Wickelwalze (10) zwischen einem Erntewagen (15) und der Einzugsvorrichtung (22) umhängbar ausgebildet ist.

## Claims

1. Process for harvesting tobacco leaves, whereby a conveyor belt (1) is placed on the ground in the longitudinal direction of a row of plants (16), next to the latter, on which conveyor belt the leaves, which are harvested along this conveyor belt (1), are placed, whereupon finally the conveyor belt (1) with the leaves lying on it, is drawn out of the tobacco field in the longitudinal direction of the row of plants (16), whereby after the leaves have been taken off, the conveyor belt (1) is wound up on to a winding roller (10) which is mounted on a stationary supporting structure (30) of a drawing-in device (22), is driven in a rotary motion and can be rotated in a horizontal plane, characterized in that the conveyor belt (1) is drawn to the winding roller (10) by means of a convex roller (5) which can also be rotated in a horizontal plane, and in that the tobacco leaves are conveyed from this belt (1) to a stitching device (6) supported by the supporting structure (30), with which stitching device the tobacco leaves are tied together in batches.

2. Process according to claim 1, characterized in that during the laying out, the conveyor belt (1) is drawn away by a reel which is transported by means of a harvesting vehicle (15), and in that the conveyor belt (1) is drawn in, in the travel direction of this harvesting vehicle (15).

3. Process according to claim 1 or 2, characterized in that the tobacco leaves are passed over from the conveyor belt (1) to at least one conveyor belt (24, 8) which conveys the tobacco leaves on the supporting structure (30) to the stitching device (6).

4. Device for carrying out the process according to one of claims 1 to 3, characterized in that the drawing-in device (22) has a winding roller (10) which is driven and can be rotated about a horizontal axis and a convex roller (5) which can rotate itself in a horizontal plane around a vertical pin (11) of the supporting structure (30), by means of which roller the conveyor belt (1), which is to be drawn in, runs to the winding roller (10), the drawing-in device (22) and a stitching device (6) being arranged on a common supporting structure (30).

5. Device according to claim 4, characterized in that shackles (12), e. g. made of rubber, are arranged at the edges of the roller (5).

6. Device according to claim 4 or 5, characterized in that a mount (28), supporting the drawing-in device (22), is mounted so as to be rotatable relative to the supporting structure (30) which can be connected to a tractor (27).

7. Device according to one of claims 4 to 6, characterized in that apart from the convex roller (5) the drawing-in device (22) has two more rollers (13, 14), the conveyor belt (7) to be pulled in, being fed through, between the rollers, one (13) of these rollers being disposed so as to be movable in a horizontal direction by means of the drawing-in resistance of the conveyor belt (1) and being capable of being pressed against the other roller (14).

8. Device according to one of claims 4 to 8, characterized in that the winding roller (10) is constructed so that it can be hung between a harvesting vehicle (15) and the drawing-in device (22).

## Revendications

1. Procédé pour la récolte de feuilles de tabac, dans lequel une bande (1) est déposée sur le sol dans la direction longitudinale d'une rangée de plants (16) et à côté de celle-ci, bande sur laquelle on dépose les feuilles cueillies le long de cette bande (1), sur quoi on tire finalement la bande (1) hors du champ de tabac dans la direction longitudinale de la rangée de plants (16) avec les feuilles qui reposent sur elle, la bande (1), après l'enlèvement des feuilles, étant enroulée sur un rouleau d'enroulement (10) qui est monté sur un châssis porteur fixe (30) d'un dispositif d'introduction (22), qui est entraîné en rotation et qui peut pivoter dans un plan horizontal, charactérisé par le fait que la bande (1) est tirée vers le rouleau d'enroulement (10) par l'intermédiaire d'un arbre bombé (5) qui peut également pivoter dans un plan horizontal, et par le fait que les feuilles de tabac sont amenées de cette bande (1) à un dispositif de piquage (6) qui est porté par le châssis porteur (30) et par lequel les feuilles de tabac sont liées par lots.

2. Procédé selon la revendication 1, caractérisé par le fait que la bande (1), lors son déploiement, est retirée d'une bande enroulée qui est transportée au moyen d'un vehicule de récolte (15), et par le fait que la bande (1) est retirée dans la direction de progression de ce vehicule de récolte (15).

3. Procédé selon la revendication 1 ou 2, caractérisé par le fait que les feuilles de tabac sont transférées de la bande (1) à au moins une bande transporteuse (24, 8) qui amène les feuilles de tabac au châssis porteur (30) du dispositif de piquage (6).

4. Dispositif pour la mise en œuvre du procédé selon l'une des revendications 1 à 3, caractérisé par le fait que le dispositif d'introduction (22) comporte un rouleau d'enroulement (10) entraîné en rotation et pouvant tourner autour d'un axe horizontal, et un arbre bombé (5) qui peut tourner de lui-même dans un plan horizontal autour d'un tourillon vertical (11) du châssis porteur (30) et sur lequel passe la bande à tirer (1) allant au rouleau d'enroulement (10), le dispositif d'introduction (22) et un dispositif piqueur (6) étant disposés sur un châssis porteur commun (30).

5. Dispositif selon la revendication 4, caractérisé par le fait que des languettes (12), par exemple en caoutchouc, sont disposées sur les bords de l'arbre (5).

6. Dispositif selon la revendication 4 ou 5, caractérisé par le fait qu'un support (28) portant le dispositif d'introduction (22) est monté pivotant par rapport au châssis porteur (30) qui peut être raccordé à un tracteur (27).

7. Dispositif selon l'une des revendications 4 à 6, caractérisé par le fait que le dispositif d'introduction (22), outre l'arbre bombé (5), comporte encore deux arbres (13, 14) entre lesquels est conduite la bande à retirer (1), l'un (13) de ces arbres étant monté de façon à pouvoir coulisser dans la direction horizontale du fait de la résistance à l'avancement de la bande (1) et être appuyé sur l'autre arbre (14).

8. Dispositif selon l'une des revendications 4 à 8, caractérisé par le fait que le rouleau d'enroulement (10) est conformé de façon à pouvoir être suspendu entre un véhicule de récolte (15) et le dispositif d'introduction (22).

FIG.1

FIG.2

FIG.3

FIG.4

FIG.5

FIG.6

FIG.7